Europäisches Patentamt

**European Patent Office**

**Office européen des brevets**

(19)

(11) Publication number: **0 027 715**

**A1**

(12)

# EUROPEAN PATENT APPLICATION

(21) Application number: **80303635.9**

(22) Date of filing: **15.10.80**

(51) Int. Cl.³: **A 01 C 23/04**
**B 05 B 9/04**

(30) Priority: **17.10.79 AU 955/79**

(43) Date of publication of application:
**29.04.81 Bulletin 81/17**

(84) Designated Contracting States:
**AT CH DE FR GB IT LI SE**

(71) Applicant: **Kalmar, Julius**
**49 Young Street**
**Sylvania Heights New South Wales 2224(AU)**

(72) Inventor: **Kalmar, Julius**
**49 Young Street**
**Sylvania Heights New South Wales 2224(AU)**

(74) Representative: **JENSEN & SON**
**8 Fulwood Place**
**High Holborn London WC1V 6HG(GB)**

(54) Spraying apparatus and method of using same.

(57) The present invention discloses a two container spraying apparatus. Liquid spray concentrate in one container (4) is pressurized (and possibly also diluted) with air (and water) passed from another container (1) into the one container (4) under the action of a pressure source (such as a mains water supply). The two containers (1,4) are uncoupled when the pressurized contents of the one container (4) can be spray discharged via a nozzle outlet (8, 10 and 11).

./...

FIG.1

FIG. 2

This invention relates to spraying apparatus suitable for use in horticultural applications as a portable liquid spray dispenser, and also relates to a method of operating same.

Portable sprays have found wide-spread use in kitchen gardens and small market garden applications which do not warrant the construction and use of permanent irrigation systems or aerial crop dusting. These portable sprays are suitable for the administration of liquid fertilizers and/or insecticides to the foliage, and are invaluable aids in crop production.

To date, most portable sprays have been of metal construction and relatively heavy. The strong metal construction has been necessary in order to support the mechanical pump assembly which is used to pressurize the liquid contents of a container in order that the liquid may be administered to the foliage as an aerosol spray. The pump assembly is usually of the piston type. In operation, the container is carried on the operator's back and the operator directs the spray nozzle with one hand and operates the pump with the other hand. The pump is usually operated by means of a lever connected to the piston. Thus, by moving the lever up and down, the piston is caused to oscillate in the cylinder, and by means of an appropriate valve arrangement between the cylinder and the liquid container, the air pressure in the container is increased. This pressure causes the liquid to be dispensed through a nozzle in aerosol form.

The known portable sprays suffer from several disadvantages. Firstly, the weight of the container and pump assembly is a physical burden on the operator, and the pumping action is very tiring. Thus the operator cannot usually use the device for long periods at a time. Furthermore, the pump assembly regularly requires maintenance due to the wearing of moving parts, leakage of seals between the piston and cylinder and also the cylinder and container, and the replacement of buckets on the piston.

It is the object of the present invention to overcome or substantially ameliorate the abovementioned disadvantages by providing a spraying apparatus without a manually operable pump.

According to one aspect of the present invention there is disclosed spraying apparatus comprising a first container having an inlet and an outlet, and a second container having a valved inlet and an outlet, said second container being adapted to hold a liquid concentrate, and said first container being adapted to be connected to said second container via conduit means, whereby ingress of fluid into said first container causes air and/or fluid to be forced into said second container via said conduit means and said valved inlet, said second container having its outlet closed, thereby pressurizing said second container.

According to a further aspect of the invention there is disclosed a method of operating spraying apparatus comprising a first container having an inlet and an outlet and a second container having a valved inlet and an outlet adapted to dispense the contents of said second container, said method comprising the steps of:-

partially filling said second container with liquid concentrate, said second container having its outlet closed,

connecting said first container to said second container such that the outlet of said first container is connected via conduit means to said valved inlet of said second container by way of fluid-tight connections,

applying a pressurized fluid supply to the inlet of said first container such that fluid enters said first container thereby forcing air out of said first container into said second container thereby pressurizing said second container,

either disconnecting said conduit means from said valved inlet when a predetermined amount of fluid has entered said second container via said conduit means, or

disconnecting said conduit means from said valved inlet when a predetermined amount of air has been forced into said second container and admitting a predetermined amount of liquid into said second container via said valved inlet,

whereby the contents of said second container are pressurized and dispensed in the form of a spray or jet via said outlet.

The present invention has the advantage that the apparatus can be constructed in light material, e.g. plastic, since it need only hold the liquid and does not need to support a pump assembly. Furthermore, there are no moving parts and hence, maintenance is practically eliminated.

The apparatus is easy to operate as no manual pumping is required. This allows the operator to use a spray for longer periods of time.

In applications where several sprays are required, the same first container can be used to pressurize several second containers each of which may contain a different insecticide, for example.

The spraying apparatus of the present invention is easily manufactured and relatively cheap to manufacture. It is also simple to operate.

Furthermore, should the liquid concentrate in the second container contain toxic substance(s), the valved inlet arrangement ensures that none of the toxic substance(s) can enter the first container or the mains water supply which is the usual source of pressurized liquid.

An embodiment of the invention will now be described with reference to the drawings in which:

Fig. 1 is a schematic, partly sectional perspective side view of the first container of the embodiment,

Fig. 2 is a schematic, partly sectional elevational view of the second container of the embodiment.

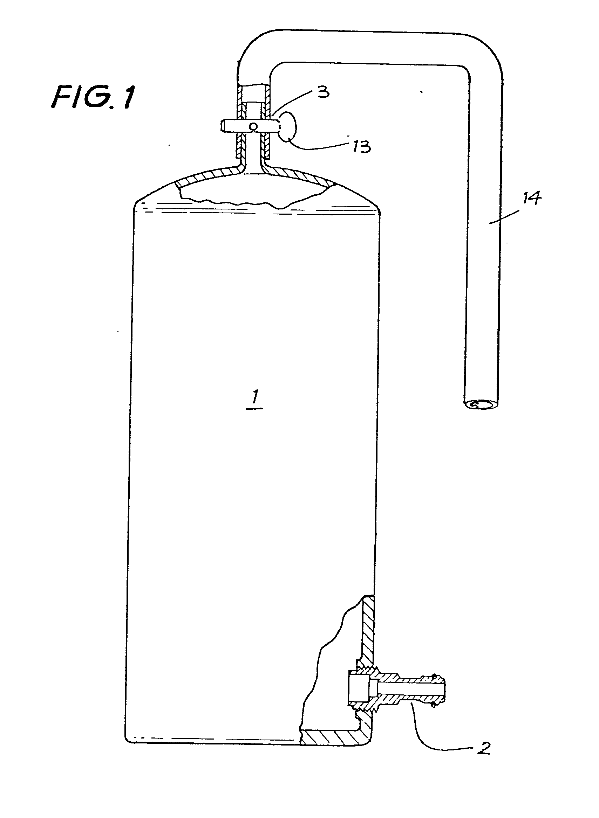

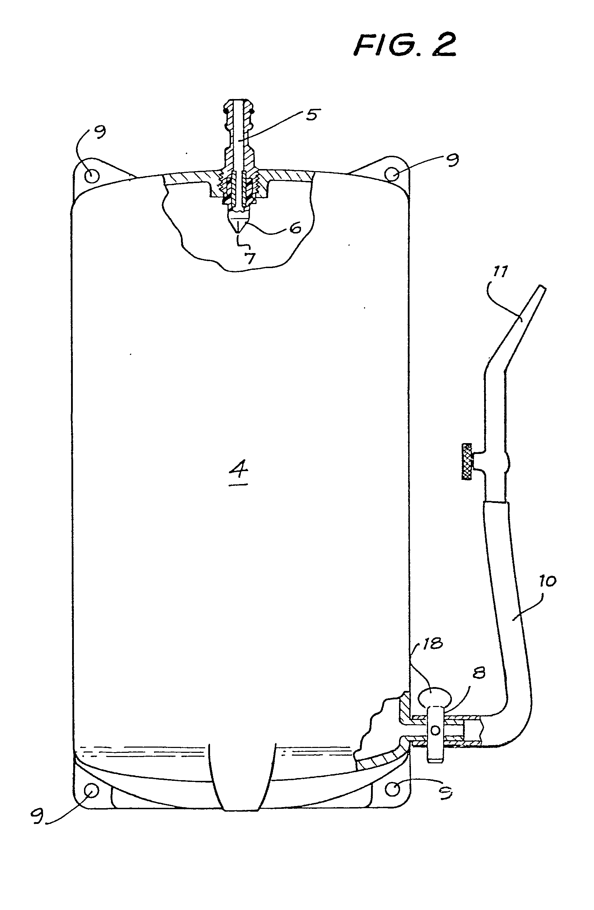

Referring now to the drawings, the container depicted in Fig. 1 shall be referred to as the pressurizing container and the container of Fig. 2 shall be referred to as the dispensing container.

As shown in Fig. 1, the pressurizing container 1 has an inlet 2 at the bottom and an outlet 3 located on top. The outlet 3 is preferably tapped at 13 and provided with a flexible connecting hose 14.

The dispensing container 4 shown in Fig. 2 has a removable inlet nozzle 5 at the top and an outlet 8, which is preferably tapped at 18, located at the bottom. The inlet nozzle 5 contains a valve arranged to allow only ingress of liquid into the dispensing container. The valve is preferably a conical rubber fitting 6 containing a narrow slit 7 such that the slit 7 opens under pressure from the outside of the container 4 and closes under pressure from the inside. The tapped outlet 8 is connected to one end of a hose 10 and a dispensing nozzle 11 is connected to the other end of the hose

10. 5

The dispensing container 4 has eyelets 9 fashioned at its extremeties for attachment to a harness (not illustrated). An operator can then carry the container 4 by means of the harness strapped to his back.

The preferred method of operating the apparatus of the preferred embodiment will now be described with reference to the drawings.

The threaded inlet nozzle 5 is screwed out of the container 4 and a liquid concentrate of the substance to be sprayed is admitted into the dispensing container 4 whilst its tapped outlet 8 is closed. This concentrate may be a concentrated solution of a herbicide, fungicide, or insecticide, for example. Alternatively, an amount of the desired substance in powdered form can be admitted, some water added, and the container 4 agitated in order to blend the mixture. In this way, a liquid concentrate can be prepared within the dispensing container. The inlet nozzle 5 is then replaced securely.

The inlet 2 of the pressurizing container is connected by use of conventional fittings via a garden hose (not illustrated), for example, to a mains water supply and the tapped outlet 3 is connected by means of a flexible connecting hose 14 to the valved inlet 5 of the dispensing container 4, the tapped outlet 3 being open.

The mains tap is then opened and water enters the pressurizing container 1 via the inlet 2. As the water level rises, air is forced out of the pressurizing container 1, through the connecting hose 14 and into the dispensing container 4. When a predetermined amount of the air has been forced out of the pressurizing container 1, either of two procedures may be followed.

The tapped outlet 3 can be closed and the hose disconnected from the inlet nozzle 5. The inlet nozzle 5 can then be connected to the mains water supply and the necessary amount of water added to make up the required concentration of insecticide or fertilizer in water.

Alternatively, the mains supply is left open, the remainder of the air in the pressurizing container 1 is forced into the dispensing container 4, and a predetermined amount of water is allowed to pass through the tapped outlet 3 into the dispensing container 4 via the connecting hose 14. The mains supply is then closed and the container connecting hose 14 removed from inlet 5.

Preferably the dispensing container 4 is made of clear or translucent material and a graduated scale is marked thereon so as to allow the level of liquid inside to be observed. Alternatively a conventional external level indicator (not illustrated) can be used. In this way, it is possible to determine when a predetermined amount of water has entered the container 4.

When the required amount of water has entered the dispensing container 4, the container can then be manually agitated in order to blend its contents. The pressurized, portable dispensing container 4 is then ready for use and it can be carried by an operator to the desired area.

The tapped outlet 8 is normally attached to a dispensing nozzle 11 via the flexible hose 10 and upon opening of the tapped outlet 8, the liquid contents will be forced out under pressure through the dispensing nozzle 11 in the form of an aerosol spray which can then be manually directed at will.

The pressure in the pressurized dispensing container 4 is determined by the volume of the pressurizing container 1 relative to the volume of the dispensing container 4. Any pressure, up to the mains supply pressure, can be obtained by forcing the appropriate amount of air and/or water into the dispensing container 4.

The foregoing describes only one embodiment of the invention and modifications, obvious to those skilled in the art, may be made thereto without departing from the scope of the invention.

For example, the above described apparatus and method can be applied for the purpose of spraying livestock in remote areas with anti-tick and disinfectant solutions.

Also, a solution of the desired final concentration can be admitted to the dispensing container 4 initially. Only air is then forced into the dispensing container during the pressurizing process. In this way there is no dilution of the solution placed in the container 4.

It will also be apparent to those skilled in the art that the container 4 can also be pressurized, up to the mains pressure, by repeated forcing of the volume of air in container 1 into container 4, the container 1 being emptied of water between each step.

WHAT I CLAIM IS:-

1.      Spraying apparatus comprising a first container having an inlet and an outlet, and a second container having a valved inlet and an outlet, said second container being adapted to hold a liquid concentrate, and said first container being adapted to be connected to said second container via conduit means, whereby ingress of fluid into said first container causes air and/or fluid to be forced into said second container via said conduit means and said valved inlet, said second container having its outlet closed, thereby pressurizing said second container.

2.      Spraying apparatus as claimed in claim 1, wherein said valved inlet comprises a tube entering said second container and having a substantially conical member fitted into the interior end of said tube, said conical member being made from resiliently deformable material and having a slit therein.

3.      Spraying apparatus as claimed in claim 1, wherein said conical member is formed from rubber and said slit passes through the apex of said conical member and is co-planar with the longitudinal axis of said conical member.

4.      Spraying apparatus as claimed in any one of claims 1 to 3, wherein the inlets of both containers are adapted for coupling to a domestic garden hose.

5.      Spraying apparatus as claimed in any one of claims 1 to 4 , wherein either or both said outlets are tapped.

6.      Spraying apparatus as claimed in any one of claims 1 to 5, wherein the outlet of said second container is connected via a flexible hose to a spray nozzle.

7.      A method of operating spraying apparatus comprising a first container having an inlet and an outlet and a second container having a valved inlet and an outlet adapted to dispense the contents of said second container, said method comprising the steps of:-

partially filling said second container with liquid concentrate, said second container having its outlet closed,

connecting said first container to said second container such that the outlet of said first container is connected via conduit means to said valved inlet of said second container by way of fluid-tight connections,

applying a pressurized fluid supply to the inlet of said first container such that fluid enters said first container thereby forcing air out of said first container into said second container thereby pressurizing said second container,

either disconnecting said conduit means from said valved inlet when a predetermined amount of fluid has entered said second container via said conduit means, or

disconnecting said conduit means from said valved inlet when a predetermined amount of air has been forced into said second container and admitting a predetermined amount of liquid into said second container via said valved inlet,

whereby the contents of said second container are pressurized and dispensed in the form of a spray or jet via said outlet.

8.      A method as claimed in claim 7, wherein after air has been forced out of said first container into said second container to pressurize same, said first container is emptied of fluid, and said pressurized fluid supply is applied to the inlet of said first container such that fluid enters said first container thereby forcing air out of said first container into said second container to further pressurize same.

9.      A method as claimed in claim 8, wherein the procedure of claim 8 is repeated until the pressure within said second container substantially equals the pressure of said pressurized supply.

10.      A method as claimed in any one of claims 7 to 9, wherein said fluid is water and said pressurized fluid supply is a mains water supply.

FIG.1

# FIG. 2

European Patent Office

**EUROPEAN SEARCH REPORT**

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | US - A - 3 756 513 (C. DENNINGER) <br> * entire document * | 1,4,6, <br> 7,10 | A 01 C   23/04 <br> B 05 B    9/04 |

TECHNICAL FIELDS SEARCHED (Int.Cl.3)

A 01 C.  23/04
A 01 M    7/00
B 05 B    9/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> Berlin | Date of completion of the search <br> 14-01-1981 | Examiner <br> SCHOFER | |

EPO Form 1503.1   06.78